# EUROPEAN PATENT APPLICATION

(11) **EP 4 683 000 A1**
(43) Date of publication of application: **21.01.2026**
(21) Application number: 24883840.1
(22) Date of filing: 08.05.2024
(51) Int. Cl.: H01M 4/66, H01M 4/134

(54) **NEGATIVE CURRENT COLLECTOR AND PREPARATION METHOD THEREFOR, AND BATTERY CELL, BATTERY AND ELECTRIC APPARATUS**

(30) Priority: 31.10.2023 CN 202311427855
(71) Applicant: Contemporary Amperex Technology Co., Limited, Ningde, Fujian 352100 (CN)
(72) Inventor: MA, Li, Ningde, Fujian 352100 (CN); GUAN, Wenhao, Ningde, Fujian 352100 (CN); ZHANG, Shuaiqi, Ningde, Fujian 352100 (CN); JIA, Xurong, Ningde, Fujian 352100 (CN); ZHONG, Wei, Ningde, Fujian 352100 (CN); GE, Xiaoming, Ningde, Fujian 352100 (CN)
(74) Representative: Ziebig Hengelhaupt Intellectual Property Attorneys Patentanwaltskanzlei PartGmbB
(86) International application number: PCT/CN2024/091576
(87) International publication number: WO 2025/091827

(57) **Abstract**

Disclosed in the present application are an anode current collector and a preparation method therefor, a battery cell, a battery, and an electric device. The anode current collector includes a metal substrate and metal nanoparticles located on at least part of a surface of the metal substrate; and the metal substrate includes a first metal element, and the first metal element is made of a material the same as the metal nanoparticles. The anode current collector provided in the present application enables the battery to have good cycle performance and further enables the battery to have high reliability.

## Description

### CROSS-REFERENCE TO RELATED APPLICATIONS

This application claims the priority of Chinese patent application 202311427855.8 entitled "ANODE CURRENT COLLECTOR AND PREPARATION METHOD THEREFOR, BATTERY CELL, BATTERY, AND ELECTRIC DEVICE" and filed on October 31, 2023, which is incorporated herein by reference in its entirety.

### TECHNICAL FIELD

This application relates to an anode current collector and a preparation method therefor, a battery cell, a battery, and an electric device.

### BACKGROUND

Compared with an ion battery, a metal battery may have a higher energy density. However, different from an anode of the ion battery, an anode of the metal battery has a more severe dendrite problem. Consequently, the commercialization of the metal battery is affected. The dendrite growth causes short-circuiting inside the battery, affecting reliability of the battery. In addition, during metal depositing and metal peeling, due to repeated tearing and reestablishment of an unstable solid electrolyte interface (SEI) film, active ions and an electrolytic solution are consumed continuously, which further affects the cycle performance of the battery. The foregoing statement is only intended to provide background information related to the present application, and does not necessarily constitute the related art.

### SUMMARY

This application provides an anode current collector and a preparation method therefor, a battery cell, a battery, and an electric device, to enable the battery to have good cycle performance and further enable the battery to have high reliability.

According to a first aspect, this application provides an anode current collector. The anode current collector includes a metal substrate and metal nanoparticles located on at least part of a surface of the metal substrate, where the metal substrate includes a first metal element, and the first metal element is made of a material the same as the metal nanoparticles.

The metal nanoparticles located on the at least part of the surface of the metal substrate can serve as active points for induced nucleation, thereby effectively reducing a nucleation overpotential of the anode current collector, and improving reliability and cycle performance of a battery. The material of the metal nanoparticles is the same as the first metal element in the metal substrate. Therefore, in a process of charging or discharging the battery, a binding force between a metal such as lithium or sodium and the metal nanoparticles is higher, thereby improving reliability and cycle performance of the battery.

In some embodiments, the metal nanoparticles include Cu nanoparticles or Ni nanoparticles.

In some embodiments, the first metal element includes Cu or Ni.

In some embodiments, a diameter of the metal nanoparticles ranges from 10 nm to 500 nm.

In some embodiments, the metal substrate includes a smooth metal substrate or a mesh metal substrate.

In some embodiments, a mesh count of the mesh metal substrate is greater than or equal to 100 mesh, and optionally ranges from 200 mesh to 500 mesh.

In some embodiments, a wire diameter of the mesh metal substrate ranges from 75 µm to 150 µm, and optionally ranges from 80 µm to 120 µm.

In some embodiments, a tensile strength of the anode current collector ranges from 8 N to 30 N.

In some embodiments, a specific surface area of the anode current collector ranges from 190 cm²/g to 250 cm²/g.

In some embodiments, the metal substrate further includes a second metal element, a standard electrode potential of the second metal element is less than a standard electrode potential of the first metal element, and optionally the second metal element includes one or more of Zn, Ni, Sn, Pb, Be, and Al.

According to a second aspect, this application provides a preparation method for an anode current collector, including the following steps: providing a metal substrate, where the metal substrate includes a first metal element and a second metal element, and a standard electrode potential of the second metal element is less than a standard electrode potential of the first metal element; providing a reaction solution, where the reaction solution includes a metal salt and an acid, and a metal element in the metal salt is the same as the first metal element; and soaking the metal substrate in the reaction solution, removing at least part of the second metal element from the metal substrate through a replacement reaction, and forming metal nanoparticles on at least part of a surface of the metal substrate, to obtain the anode current collector, where the first metal element is made of a material the same as that of the metal nanoparticles.

The metal substrate includes a first metal element and a second metal element, and a standard electrode potential of the second metal element is less than a standard electrode potential of the first metal element. Therefore, the more active second metal element in the metal substrate may be dissolved by using the principle of the replacement reaction, so that pores may be formed on a surface of the metal substrate, thereby increasing an electrochemically active specific surface area of the metal substrate. In addition, through a chemical plating process, the metal in the reaction solution may be further replaced and the metal nanoparticles are precipitated from the metal on the surface of the metal substrate.

The metal nanoparticles formed on the at least part of the surface of the metal substrate can serve as active points for induced nucleation, thereby effectively reducing a nucleation overpotential of the anode current collector, and improving reliability and cycle performance of a battery.

The material of the metal nanoparticles is the same as the first metal element in the metal substrate. Therefore, in a process of charging or discharging the battery, a binding force between a metal such as lithium or sodium and the metal nanoparticles is higher, thereby improving reliability and cycle performance of the battery.

In addition, because effects of the replacement reaction on the metal substrate are indiscriminate, the metal nanoparticles are not selectively precipitated on the surface of the metal substrate, so as to avoid appearance of preferential growth points and reduce dendrite generation, thereby improving reliability and cycle performance of the battery.

Therefore, the anode current collector prepared by using the preparation method provided in this embodiment of this application is applied to an anode-free battery cell such as an anode-free lithium metal battery cell or an anode-free sodium metal battery cell, to enable the battery to have good cycle performance and further enable the battery to have high reliability.

In some embodiments, the metal substrate and the reaction solution perform the replacement reaction in an ultrasonic state. The ultrasonic treatment can improve a wetting action between the metal substrate and the reaction solution, thereby helping the reaction to be performed uniformly.

In some embodiments, a time of the reaction ranges from 15 min to 60 min.

In some embodiments, the metal nanoparticles include Cu nanoparticles or Ni nanoparticles.

In some embodiments, the first metal element includes Cu or Ni.

In some embodiments, the second metal element includes one or more of Zn, Ni, Sn, Pb, Be, and Al.

In some embodiments, a mass content of the second metal element in the metal substrate is less than or equal to 35%, and optionally ranges from 15% to 30%. By adjusting the mass content of the second metal element to fall within the foregoing range, the anode current collector can have a high tensile strength and a high electrochemically active specific surface area, so that the battery can have a good cycle performance, a good processing performance, and a high reliability.

In some embodiments, the metal substrate includes a smooth metal substrate or a mesh metal substrate.

In some embodiments, a mesh count of the mesh metal substrate is greater than or equal to 100 mesh, and optionally ranges from 200 mesh to 500 mesh.

In some embodiments, a wire diameter of the mesh metal substrate ranges from 75 µm to 150 µm, and optionally ranges from 80 µm to 120 µm.

The electrochemically active specific surface area of the anode current collector may be adjusted by adjusting the wire diameter and/or the mesh count of the mesh metal substrate. The electrochemically active specific surface area of the anode current collector reflects an effective area in which the anode current collector participates in a reaction of the battery. In addition, when a current is the same, a larger electrochemically active specific surface area of the anode current collector indicates a smaller current density. Therefore, a probability of forming a dendrite during charging or discharging of the battery is smaller.

Tensile strength of the anode current collector may be further adjusted by adjusting the wire diameter and/or the mesh count of the mesh metal substrate, so that the battery has good processing performance.

In some embodiments, the metal salt in the reaction solution includes one or more of a metal sulfate, a metal nitrate, a metal hydrochloride, and a metal acetate.

In some embodiments, a concentration of metal ions in the reaction solution ranges from 0.05 mol/L to 10 mol/L, and optionally ranges from 0.5 mol/L to 5 mol/L. By adjusting the concentration of the metal ions in the reaction solution to fall within the foregoing range, not only a replacement reaction rate can be improved, but also a rate at which the metal nanoparticles are precipitated can be improved, to avoid a case that the time of the reaction is excessively increased because the reaction becomes very slow, thereby reducing energy consumption, and further ensuring that the extent of the replacement reaction is easy to be controlled. Therefore, uniform precipitation of the metal nanoparticles is facilitated, and the diameter of the metal nanoparticles can be further adjusted.

In some embodiments, the acid in the reaction solution includes one or more of an acetic acid and a citric acid. The acid in the reaction solution can improve a wetting effect between the metal substrate and the reaction solution, thereby helping the reaction to be performed uniformly.

In some embodiments, a solvent of the reaction solution includes water.

In some embodiments, pH of the reaction solution ranges from 3 to 6.5, and optionally ranges from 6 to 6.5. by adjusting pH of the reaction solution to fall within the foregoing range, the reaction solution can be weakly acidic, to improve a wetting action between the metal substrate and the reaction solution, thereby helping precipitate uniform metal nanoparticles on the surface of the metal substrate; a case that the second metal element in the metal substrate excessively reacts with the acid to affect an effect of the replacement reaction and affect the precipitation of the metal nanoparticles can be further avoided; and the prepared anode current collector can further have a high tensile strength.

According to a third aspect, this application provides a battery cell, including the anode current collector according to the first aspect of this application or an anode current collector prepared by using the preparation method according to the second aspect of this application.

Optionally, the battery cell includes at least one of an anode-free lithium metal battery cell or an anode-free sodium metal battery cell.

According to a fourth aspect, this application further provides a battery, including the battery cell according to the third aspect of this application.

According to a fifth aspect, this application further provides an electric device, including the battery according to the fourth aspect of this application. The battery is configured to provide electric energy.

The electric device in this application includes the battery provided in this application, and therefore has at least the same advantages as the battery.

### BRIEF DESCRIPTION OF THE DRAWINGS

To describe the technical solutions of the embodiments of this application more clearly, the following briefly describes the accompanying drawings for describing the embodiments of this application. Apparently, the accompanying drawings described below are only some embodiments of this application, and a person of ordinary skill in the art may further obtain other accompanying drawings according to the accompanying drawings without creative efforts.
FIG. 1 is a schematic diagram of a battery cell according to some embodiments of this application.
FIG. 2 is a schematic exploded view of a battery cell according to some embodiments of this application.
FIG. 3 is a schematic diagram of a battery module according to some embodiments of this application.
FIG. 4 is a schematic diagram of a battery pack according to some embodiments of this application.
FIG. 5 is a schematic exploded view of the battery pack shown in FIG. 4.
FIG. 6 is a schematic diagram of an electric device according to some embodiments of this application.
FIG. 7 shows a scanning electron microscope (SEM) image of an anode current collector prepared in comparative example 1.
FIG. 8 shows a scanning electron microscope (SEM) image of an anode current collector prepared in example 1.

In the drawings, the components are not drawn to actual scale. Descriptions of reference signs are as follows: 1: battery pack; 2: upper box; 3: lower box; 4: battery module; 5: battery; 51: housing; 52: electrode assembly; and 53: cover plate.

### DETAILED DESCRIPTION

Embodiments of an anode current collector and a preparation method therefor, a battery cell, a battery, and an electric device are specifically disclosed in detail below and appropriately described with reference to the accompanying drawings. However, there will be cases where unnecessary detailed descriptions are omitted. For example, there are cases where detailed descriptions of well-known matters and repeated descriptions of actually identical structures are omitted. This is to avoid unnecessary redundancy in the following descriptions and to facilitate the understanding by a person skilled in the art. In addition, the accompanying drawings and subsequent descriptions are provided for those skilled in the art to fully understand this application, and are not intended to limit the subject matter recited in the claims.

A "range" disclosed in this application is defined in a form of a lower limit and an upper limit, and a given range is defined by selecting a lower limit and an upper limit, and the selected lower limit and upper limit define boundaries of a particular range. A range defined in this manner may be inclusive or exclusive of end values, and may be arbitrarily combined, i.e., any lower limit may be combined with any upper limit to form a range. For example, if ranges of 60 to 120 and 80 to 110 are listed for a particular parameter, it is to be understood that ranges of 60 to 110 and 80 to 120 are also expected. Additionally, if minimum range values of 1 and 2 are listed and maximum range values of 3, 4, and 5 are listed, the following ranges may all be contemplated: 1 to 3, 1 to 4, 1 to 5, 2 to 3, 2 to 4, and 2 to 5. In this application, unless otherwise specified, a numerical range "a to b" represents an abbreviated representation of any combination of real numbers between a and b, where both a and b are real numbers. For example, a numerical range "0 to 5" indicates that all real numbers between "0 to 5" have been listed herein, and "0 to 5" is only an abbreviated representation of a combination of these numerical values. In addition, when a parameter is expressed as an integer ≥2, it is equivalent to disclosing that the parameter is, for example, an integer of 2, 3, 4, 5, 6, 7, 8, 9, 10, 11, 12, or the like.

Unless otherwise specified, all embodiments and optional embodiments of this application may be combined to form a new technical solution. In addition, the technical solution shall be included in the disclosed content of this application.

Unless otherwise specified, all technical features and optional technical features of this application may be combined to form a new technical solution. In addition, the technical solution shall be included in the disclosed content of this application.

Unless otherwise specified, all steps of the present application may be performed sequentially or randomly, and preferably sequentially. For example, the method including steps (a) and (b) indicates that the method may include steps (a) and (b) performed sequentially, or the method may include steps (b) and (a) performed sequentially. For example, reference to "the method may further include step (c)" indicates that step (c) may be added to the method in any order, e.g., the method may include steps (a), (b) and (c), or steps (a), (c) and (b), or steps (c), (a) and (b), or the like.

In this application, the term "a plurality of" means two or more.

In the descriptions of the embodiments of this application, if no particular description is made, that a first feature is "above" or "below" a second feature may be that the first feature directly contacts with the second feature, or the first feature indirectly contacts with the second feature through an intermediate medium. In addition, that a first feature is "over", "above", and "upward" a second feature may mean that the first feature is directly above or obliquely above the second feature, or merely indicate that a horizontal height of the first feature is higher than that of the second feature. That a first feature is "under", "below", and "beneath" the second feature may be that the first feature is directly below or obliquely below the second feature, or may merely indicate that a horizontal height of the first feature is lower than that of the second feature.

Unless otherwise specified, terms used in this application have well-known meanings generally understood by a person skilled in the art.

Unless otherwise specified, numerical values of parameters mentioned in this application may be tested by using various test methods commonly used in the art, for example, testing may be performed according to a test method provided in the embodiments of this application. Unless otherwise specified, the test temperature of the parameters is 25°C.

A battery mentioned in an embodiment of this application may be a single physical module including one or more battery cells to provide a higher voltage and a higher capacity. For example, the battery provided in this application may include a battery cell, a battery module, a battery pack, or the like.

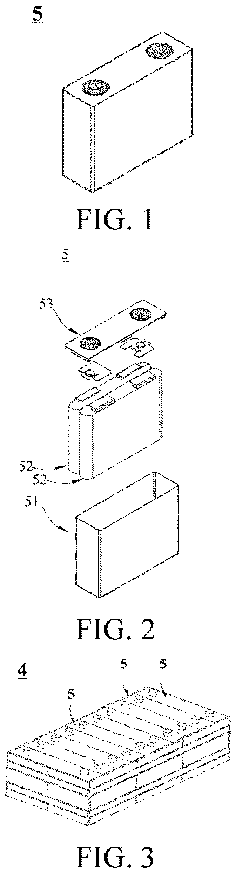

The battery cell is the smallest unit constituting the battery, and can achieve functions of charging and discharging independently. The battery cell may be cylindrical, cuboid or in another shape, which is not limited in the embodiments of this application. FIG. 1 shows a battery cell 5 of a cuboid structure as an example.

When there are a plurality of battery cells, the plurality of battery cells are connected in series, in parallel, or in a series-parallel mixed manner by using a bus component. In some embodiments, a battery may be a battery module. When there are a plurality of battery cells, the plurality of battery cells are arranged and fixed to form a battery module. In some embodiments, the battery may be a battery pack. The battery pack includes a box and a battery cell, and the battery cell or the battery module is accommodated in the box. In some embodiments, the box may be used as a part of a chassis structure of a vehicle. For example, a part of the box may be at least a part of a floor of the vehicle, or a part of the box may be at least a part of a cross beam and a longitudinal beam of the vehicle.

In some embodiments, the battery may be an energy storage device. The energy storage device includes an energy storage container, an energy storage electric cabinet, and the like.

The battery cell includes an electrode assembly. The electrode assembly may be either of a winding type structure or a stacked structure. This is not limited in the embodiments of this application.

The battery cell may further include an outer packaging. The outer packaging may be used for packaging the electrode assembly. The outer packaging may be a hard case, for example, a hard plastic case, an aluminum case, or a steel case. The outer packaging may alternatively be a soft pack, for example, a pouch type soft pack. The material of the soft pack may be plastic, for example, one or more of polypropylene (PP), polybutylene terephthalate (PBT), and polybutylene succinate (PBS).

In some embodiments, as shown in FIG. 2, the outer packaging may include a housing 51 and a cover plate 53. The housing 51 may include a bottom plate and a side plate connected to the bottom plate. The bottom plate and the side plate enclose an accommodating cavity. The housing 51 is provided with an opening in communication with the accommodating cavity, and the cover plate 53 is used for covering the opening to close the accommodating cavity. The electrode assembly 52 is packaged in the accommodating cavity. One or more electrode assemblies 52 may be included in the battery cell 5, which may be adjusted as required.

In some embodiments, the battery cell may be assembled into a battery module, the battery module may include a plurality of battery cells, and a specific quantity of battery cells may be adjusted according to the application and capacity of the battery module. FIG. 3 is a schematic diagram of a battery module 4 as an example. As shown in FIG. 3, in the battery module 4, a plurality of battery cells 5 may be arranged sequentially in a length direction of the battery module 4. Certainly, the plurality of battery cells may alternatively be arranged in any other manner. Further, the plurality of battery cells 5 may be fixed through fasteners.

Optionally, the battery module 4 may further include a shell having an accommodating space, in which the plurality of battery cells 5 are accommodated.

In some embodiments, the battery module may alternatively be assembled into a battery pack. A quantity of the battery modules included in the battery pack may be adjusted according to the application and capacity of the battery pack.

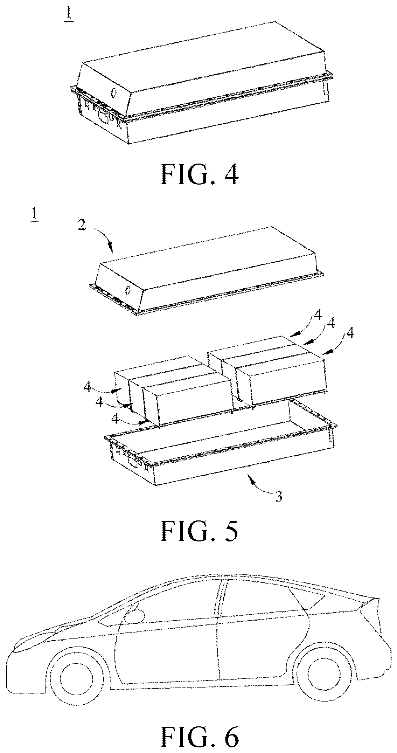

FIG. 4 and FIG. 5 are schematic diagrams of a battery pack 1 as an example. As shown in FIG. 4 and FIG. 5, the battery pack 1 may include a box body and a plurality of battery modules 4 disposed in the box body. The box body includes an upper box body 2 and a lower box body 3. The upper box body 2 is used for covering the lower box body 3 and form an enclosed space for accommodating the battery modules 4. The plurality of battery modules 4 may be arranged in the box body in any manner.

The battery cell provided in the embodiments of this application may include an anode-free battery cell, for example, at least one of an anode-free lithium metal battery cell, an anode-free sodium metal battery cell, and the like.

The anode-free battery cell refers to a battery cell formed by not actively disposing an anode active material layer on the anode side during the manufacturing process of the battery cell. For example, during the manufacturing process of the battery cell, no layer or carbonaceous active material layer is disposed at the anode by a procedure such as coating or deposition to form an anode active material layer. During the first charging, ions get electrons at the anode side and are deposited on the surface of the anode current collector to form a metal. During the discharging, a metal can be converted into ions transported back to the cathode to achieve cyclic charging and discharging. Compared with other battery cells, the anode-free battery cell has no anode active material layer, and therefore can obtain a higher energy density. In some embodiments, to improve the performance of a battery cell, some substances that can be conventionally used as anode active materials, for example, a carbon material, may also be disposed on the anode side of the anode-free battery cell. Although these substances have a particular capacity, because the substances are relatively small in content and are not used as main anode active materials in a battery cell, a battery cell formed in this way may still be considered as an anode-free battery cell. A Cell Balance (CB) value of an anode-free battery cell is usually very small. For example, in some embodiments, A CB value of an anode-free battery cell may be less than or equal to 0.1. The CB value is obtained by dividing the capacity per unit area of the anode in the battery cell by the capacity per unit area of the cathode. Since no anode active material is contained or only a small amount of anode active material is contained in the anode-free sodium battery cell, the anode has a small capacity per unit area, and then the CB value is very small, for example, is usually less than or equal to 0.1.

The embodiments of this application provide an anode current collector, and the anode current collector is used in an anode-free battery cell such as an anode-free lithium metal battery cell or an anode-free sodium metal battery cell, to enable the battery to have good cycle performance and further enable the battery to have high reliability.

The anode current collector provided in the embodiments of this application includes a metal substrate and metal nanoparticles located on at least part of a surface of the metal substrate, where the metal substrate includes a first metal element, and the first metal element is made of a material the same as the metal nanoparticles.

Metals such as lithium and sodium have poor wettability on a framework of a conventional metal current collector, causing a relatively large nucleation overpotential. In addition, preferential nucleation is easily performed at some surface defect positions on the conventional metal current collector, and positions of preferential nucleation form preferential growth points. Further, dendrite generation is easily caused. In a severe case, short-circuiting inside the battery may be caused, affecting reliability and cycle performance of the battery.

The anode current collector provided in the embodiments of this application includes a metal substrate and metal nanoparticles located on at least part of a surface of the metal substrate, where the metal substrate includes a first metal element, and the first metal element is made of a material the same as the metal nanoparticles. The metal nanoparticles located on the at least part of the surface of the metal substrate can serve as active points for induced nucleation, thereby effectively reducing a nucleation overpotential of the anode current collector, and improving reliability and cycle performance of a battery. The material of the metal nanoparticles is the same as the first metal element in the metal substrate. Therefore, in a process of charging or discharging the battery, a binding force between a metal such as lithium or sodium and the metal nanoparticles is higher, thereby improving reliability and cycle performance of the battery.

In some embodiments, the metal nanoparticles may include Cu nanoparticles or Ni nanoparticles.

In some embodiments, the first metal element may include Cu or Ni.

In some embodiments, a diameter of the metal nanoparticles may range from 10 nm to 500 nm.

In some embodiments, the metal substrate may further include a second metal element, and a standard electrode potential of the second metal element is less than a standard electrode potential of the first metal element.

Optionally, the second metal element may include one or more of Zn, Ni, Sn, Pb, Be, and Al.

In some embodiments, the metal substrate may include a smooth metal substrate or a mesh metal substrate.

For example, the anode current collector may include a smooth metal substrate and metal nanoparticles located on at least part of a surface of the smooth metal substrate, and the metal nanoparticles protrude from the surface of the smooth metal substrate. Alternatively, the anode current collector may include a mesh metal substrate and metal nanoparticles located on at least part of a wire surface of the mesh metal substrate, and the metal nanoparticles protrude from the wire surface of the mesh metal substrate.

In some embodiments, a mesh count of the mesh metal substrate may be greater than or equal to 100 mesh, and optionally ranges from 200 mesh to 500 mesh.

In some embodiments, a wire diameter of the mesh metal substrate may range from 75 µm to 150 µm, and optionally range from 80 µm to 120 µm.

In some embodiments, a tensile strength of the anode current collector may range from 8 N to 30 N, and optionally range from 10 N to 30 N.

In some embodiments, a specific surface area of the anode current collector may range from 190 cm²/g to 250 cm²/g.

The specific surface area of the anode current collector has a meaning well-known in the art, and can be tested by using instruments and methods known in the art. For example, with reference to GB/T 19587-2017, a nitrogen adsorption specific surface area analysis test method may be used for testing, and a BET (Brunauer Emmett Teller) method is used for calculation. The test instrument can be a Tri-Star 3020 type specific surface area analysis tester available from Micromeritics, the United States.

An embodiment of this application further provides a preparation method for an anode current collector.

The preparation method includes the following steps: providing a metal substrate, where the metal substrate includes a first metal element and a second metal element, and a standard electrode potential of the second metal element is less than a standard electrode potential of the first metal element; providing a reaction solution, where the reaction solution includes a metal salt and an acid, and a metal element in the metal salt is the same as the first metal element; and soaking the metal substrate in the reaction solution, removing at least part of the second metal element from the metal substrate through a replacement reaction, and forming metal nanoparticles on at least part of a surface of the metal substrate, to obtain the anode current collector, where the first metal element is made of a material the same as that of the metal nanoparticles.

The metal substrate includes a first metal element and a second metal element, and a standard electrode potential of the second metal element is less than a standard electrode potential of the first metal element. Therefore, the more active second metal element in the metal substrate may be dissolved by using the principle of the replacement reaction, so that pores may be formed on a surface of the metal substrate, thereby increasing an electrochemically active specific surface area of the metal substrate. In addition, through a chemical plating process, the metal in the reaction solution may be further replaced and the metal nanoparticles are precipitated from the metal on the surface of the metal substrate.

The metal nanoparticles formed on the at least part of the surface of the metal substrate can serve as active points for induced nucleation, thereby effectively reducing a nucleation overpotential of the anode current collector, and improving reliability and cycle performance of a battery.

The material of the metal nanoparticles is the same as the first metal element in the metal substrate. Therefore, in a process of charging or discharging the battery, a binding force between a metal such as lithium or sodium and the metal nanoparticles is higher, thereby improving reliability and cycle performance of the battery.

In addition, because effects of the replacement reaction on the metal substrate are indiscriminate, the metal nanoparticles are not selectively precipitated on the surface of the metal substrate, so as to avoid appearance of preferential growth points and reduce dendrite generation, thereby improving reliability and cycle performance of the battery.

Therefore, the anode current collector prepared by using the preparation method provided in this embodiment of this application is applied to an anode-free battery cell such as an anode-free lithium metal battery cell or an anode-free sodium metal battery cell, to enable the battery to have good cycle performance and further enable the battery to have high reliability.

In some embodiments, a time of the reaction may range from 15 min to 60 min.

In some embodiments, the metal substrate and the reaction solution may perform the replacement reaction in an ultrasonic state. The ultrasonic treatment can improve a wetting action between the metal substrate and the reaction solution, thereby helping the reaction to be performed uniformly.

Optionally, an ultrasonic frequency may range from 28 Hz to 80 Hz.

In some embodiments, the generated metal nanoparticles may include Cu nanoparticles or Ni nanoparticles.

In some embodiments, the first metal element may include Cu or Ni.

In some embodiments, the second metal element may include one or more of Zn, Ni, Sn, Pb, Be, and Al.

In some embodiments, the first metal element may include Cu, and the second metal element may include one or more of Zn, Ni, Sn, Pb, and Be.

The standard electrode potential of the second metal element is less than the standard electrode potential of Cu, and the metal activity of the second metal element is greater than that of Cu. Therefore, the more active second metal element on the surface of the metal substrate may be dissolved by using the principle of the replacement reaction, and Cu in the reaction solution is replaced to form the Cu metal nanoparticles.

In some embodiments, the first metal element may include Ni, and the second metal element may include Al.

The standard electrode potential of the second metal element is less than the standard electrode potential of Ni, and the metal activity of the second metal element is greater than that of Ni. Therefore, the more active second metal element on the surface of the metal substrate may be dissolved by using the principle of the replacement reaction, and Ni in the reaction solution is replaced to form the Ni metal nanoparticles.

In some embodiments, a mass content of the second metal element in the metal substrate may be less than or equal to 35%, optionally, ranges from 4% to 35%, and further optionally ranges from 15% to 30%.

A higher mass content of the second metal element indicates more pores formed on the surface of the metal substrate after the replacement reaction, a higher electrochemically active specific surface area of the metal substrate, and more uniform formed metal nanoparticles. In this way, a nucleation overpotential of the anode current collector can be reduced better, and preferential growth points can be reduced, thereby improving reliability and cycle performance of the battery. However, when the mass content of the second metal element is increased, the tensile strength of the prepared anode current collector is reduced. In a battery preparing process, the anode current collector usually needs to pass through rollers for a plurality of times. The tensile strength of the anode current collector is reduced, and the processing performance of the anode current collector becomes poor.

Therefore, by adjusting the mass content of the second metal element to fall within the foregoing range, the anode current collector can have a high tensile strength and a high electrochemically active specific surface area, so that the battery can have a good cycle performance, a good processing performance, and a high reliability.

In some embodiments, the metal substrate may include a smooth metal substrate or a mesh metal substrate. the metal nanoparticles formed on the surface of the smooth metal substrate protrude from the surface of the smooth metal substrate. the metal nanoparticles formed on the surface of the mesh metal substrate protrude from the wire surface of the mesh metal substrate.

In some embodiments, the metal substrate may include a brass mesh, a copper-nickel mesh, and a bronze mesh. The brass mesh is optional based on comprehensive consideration of factors such as the conductivity, the ductility, the tensile strength, and the costs.

In some embodiments, a mesh count of the mesh metal substrate may be greater than or equal to 100 mesh, and optionally ranges from 200 mesh to 500 mesh.

In some embodiments, a wire diameter of the mesh metal substrate may range from 75 µm to 150 µm, and optionally range from 80 µm to 120 µm.

The electrochemically active specific surface area of the anode current collector may be adjusted by adjusting the wire diameter and/or the mesh count of the mesh metal substrate. The electrochemically active specific surface area of the anode current collector reflects an effective area in which the anode current collector participates in a reaction of the battery. In addition, when a current is the same, a larger electrochemically active specific surface area of the anode current collector indicates a smaller current density. Therefore, a probability of forming a dendrite during charging or discharging of the battery is smaller.

Tensile strength of the anode current collector may be further adjusted by adjusting the wire diameter and/or the mesh count of the mesh metal substrate, so that the battery has good processing performance.

In some embodiments, the mesh metal substrate may be a planar mesh metal substrate, or may be a three-dimensional mesh metal substrate.

In some embodiments, the mesh metal substrate may be commercially available, or may be obtained through a weave process. A weaving manner of the mesh metal substrate may be a weaving manner known in the art, for example, may include, but is not limited to, one or more of plain weaving, twill weaving, Dutch plain weaving, Dutch twill weaving, reverse Dutch weaving, and five-heddle weaving.

In some embodiments, a rule for selecting the metal salt in the reaction solution is that the salt formed by anions in the reaction solution and the second metal element has relatively large solubility in the reaction solution.

In some embodiments, a solvent of the reaction solution may include water.

In some embodiments, the metal salt in the reaction solution may be a water-soluble metal salt. As the foregoing water-soluble metal salt, the foregoing water-soluble metal salt is not particularly limited provided that the water-soluble metal salt can be dissolved in the reaction solution and the reaction solution having a required concentration can be obtained. For example, the water-soluble metal salt may include, but is not limited to, one or more of a metal sulfate, a metal nitrate, a metal hydrochloride, and a metal acetate.

For example, the first metal element includes Cu, and the metal salt in the reaction solution may include, but is not limited to, one or more of CuSO₄, CuCl₂, and Cu(NO₃)₂; and the first metal element includes Ni, and the metal salt in the reaction solution may include, but is not limited to, one or more of NiSO₄, NiCl₂, and nickel acetate.

In some embodiments, a concentration of metal ions in the reaction solution may range from 0.05 mol/L to 10 mol/L, and optionally ranges from 0.5 mol/L to 5 mol/L.

By adjusting the concentration of the metal ions in the reaction solution to fall within the foregoing range, not only a replacement reaction rate can be improved, but also a rate at which the metal nanoparticles are precipitated can be improved, to avoid a case that the time of the reaction is excessively increased because the reaction becomes very slow, thereby reducing energy consumption, and further ensuring that the extent of the replacement reaction is easy to be controlled. Therefore, uniform precipitation of the metal nanoparticles is facilitated, and the diameter of the metal nanoparticles can be further adjusted.

In some embodiments, the acid in the reaction solution may include, but is not limited to, one or more of an acetic acid and a citric acid.

The acid in the reaction solution can improve a wetting effect between the metal substrate and the reaction solution, thereby helping the reaction to be performed uniformly.

In some embodiments, pH of the reaction solution may range from 3 to 6.5, and optionally range from 6 to 6.5.

by adjusting pH of the reaction solution to fall within the foregoing range, the reaction solution can be weakly acidic, to improve a wetting action between the metal substrate and the reaction solution, thereby helping precipitate uniform metal nanoparticles on the surface of the metal substrate; a case that the second metal element in the metal substrate excessively reacts with the acid to affect an effect of the replacement reaction and affect the precipitation of the metal nanoparticles can be further avoided; and the prepared anode current collector can further have a high tensile strength.

Some raw materials used in the process of preparing the anode current collector provided in the embodiments of this application may all be commercially available unless otherwise specified.

### [Cathode plate]

The battery cell further includes a cathode plate.

In some embodiments, the cathode includes a cathode current collector and a cathode film layer that is arranged on at least one surface of the cathode current collector and that includes a cathode active material. For example, the cathode current collector has two opposite surfaces in a thickness direction thereof, and the cathode film layer is arranged on either or both of the two opposite surfaces of the cathode current collector.

In some embodiments, the cathode active material includes a material capable of deintercalating and intercalating lithium.

As an example, the cathode active material may include, but is not limited to, one or more of lithium-transition metal oxide, metal sulfide, lithium-containing phosphate, and respective modified compounds thereof. Examples of lithium-transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, and respective modified compounds thereof. The lithium-transition metal oxide may include, but is not limited to, a layered structure or a spinel structure. Examples of lithium-containing phosphate may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and respective modified compounds thereof.

In some embodiments, to further improve the energy density of a battery, the cathode active material may include one or more of lithium-transition metal oxide represented by a general formula LiₐNi_{b}Co_{c}M_{d}OₑD_{f} and modified compounds thereof. 0.8 ≤ a ≤ 1. 2, 0.5 ≤ B < 1, 0 < c < 1, 0 < d < 1, 1 ≤ e ≤ 2, 0 ≤ f ≤ 1, M may include, but is not limited to, one or more of Ge, Mo, Sn, Mn, Al, Zr, Zn, Cu, Cr, Mg, Fe, V, Ti, and B, and D may include, but is not limited to, one or more of N, F, S and Cl.

In some embodiments, the cathode active material may include both lithium-transition metal oxide and lithium-containing phosphate, thereby helping to obtain a battery having both a large capacity and high reliability.

For example, the cathode active material may include, but is not limited to, one or more of LiCoO₂, LiNiO₂, LiMnO₂, LiNi_{1/2}Mn_{1/2}O₂, LiMn₂O₄, Li_{4/3}Ti_{5/3}O₄, LiNi_{1/2}Mn_{1/2}O₂, LiNi_{1/3}Co_{1/3}Mn_{1/3}O₂(NCM333), LiNi_{0.5}Co_{0.2}Mn_{0.3}O₂(NCM523), LiNi_{0.6}Co_{0.2}Mn_{0.2}O₂(NCM622), LiNi_{0.8}Co_{0.1}Mn_{0.1}O₂(NCM811), LiNi_{0.80}Co_{0.15}Al_{0.05}O₂, LiFePO₄, LiMnPO₄, and Li_{1.13}Ti_{0.57}Fe_{0.3}S₂.

In some embodiments, the cathode active material includes a material capable of deintercalating and intercalating sodium. For example, the cathode active material may include, but is not limited to, one or more of a layered transition metal oxide (which includes, but is not limited to, a P2 type or an O3 type), a polyanionic material (for example, phosphate, fluorophosphate, pyrophosphate, or sulfate), and a Prussian material.

In some embodiments, as an example, the cathode active material may include, but is not limited to, one or more of NaFeO₂, NaCoO₂, NaCrO₂, NaMnO₂, NaNiO₂, Na_{0.67}MO₂ (M includes at least two of Fe, Co, Cr, Mn, Ni, V, Ti, and Mo), NaMO₂ (M includes at least two of Fe, Co, Ni, V, Ti, and Mo), NaFePO₄, NaMnPO₄, NaCoPO₄, Na₄Fe₃(PO₄)₂O₇, Na₃V₂(PO₄)₂F₃, Na₃V₂(PO₄)₃, Prussian Blue, Prussian White, and respective modified compounds thereof.

The modified compounds of the cathode active materials may be obtained by performing doping modification and/or surface coating modification on the cathode active material.

In some embodiments, the cathode film layer may optionally include a cathode conductive agent. As an example, the cathode conductive agent may include, but is not limited to, one or more of superconducting carbon, conductive graphite, acetylene black, carbon black, Ketjen black, carbon dots, carbon nanotubes, graphene, and carbon nanofibers.

In some embodiments, the cathode film layer may further optionally include a cathode binder. As an example, the cathode binder may include, but is not limited to, at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyethylene oxide, fluorine-containing acrylate resin, styrene-butadiene rubber (SBR), water-soluble unsaturated resin SR-1B, waterborne acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS).

In some embodiments, the cathode current collector may be a metal foil or a composite current collector. As an example of the metal foil, an aluminum foil may be used. The composite current collector may include a polymer material base layer and a layer of a metal material formed on at least one surface of the polymer material base layer. For example, the metal material may include, but is not limited to, one or more of aluminum, aluminum alloy, nickel, nickel alloy, titanium, titanium alloy, silver, and silver alloy. For example, the polymer material base layer may include, but is not limited to, one or more of polypropylene (PP), polyethylene terephthalate (PET), polybutylene terephthalate (PBT), polystyrene (PS), and polyethylene (PE).

The cathode film layer is usually formed by coating cathode slurry on the cathode current collector and performing drying and cold pressing. The cathode slurry is usually formed by dispersing the cathode active material, an optional cathode conductive agent, an optional cathode binder, and any other components in a solvent and performing stirring uniformly. The solvent may be, but is not limited to, N-methyl pyrrolidone (NMP).

### [Electrolyte]

The battery cell further includes an electrolyte.

In some embodiments, the electrolyte is an electrolytic solution, and the electrolytic solution includes an electrolyte salt and an organic solvent.

In some embodiments, the electrolytic solution includes an anion, and the anion may include one or more of a bis(fluorosulfonyl)imide anion (FSI), a bis(trifluoromethanesulfonyl)imide anion (TFSI⁻), a bis(oxalato)borate anion (BOB⁻), a difluoro(oxalato)borate anion (DFOB⁻), a difluorobis(oxalato)phosphate anion (DFOP⁻), a tetrafluoro(oxalato)phosphate anion (TFOP⁻), a difluorophosphate anion (PO₂F₂⁻), a hexafluorophosphate anion (PF₆⁻), a tetrafluoroborate anion (BF₄⁻), a hexafluoroarsenate anion (AsF₆⁻), and a triflate anion (CF₃SO₃⁻).

In some embodiments, the electrolytic solution includes a cation, and the cation may include one or more of a lithium ion and a sodium ion.

In some embodiments, a concentration of the electrolyte salt may be 0.3 mol/L or more, and optionally 0.7 mol/L or more, and the concentration of the electrolyte salt may be further 4 mol/L or less, and optionally, 2.5 mol/L or less, or 1.7 mol/L or less. When the concentration of the electrolyte salt falls within the foregoing range, the electrolytic solution can have appropriate ionic conductivity.

The organic solvent may include, but is not limited to, one or more of an ester, an ether, a sulfone, a nitrile, and the like. The ester may include, but is not limited to, one or more of carbonate, phosphate, carboxylate, sulfate, sulfonate, and the like. The carbonate may include a cyclic carbonate and/or a chain carbonate. Optionally, the carbonate may include both a cyclic carbonate and a chain carbonate. The chain carbonate may include a low-viscosity polar chain carbonate, an aliphatic branched carbonate, and the like.

For example, the organic solvent includes, but is not limited to, one or more of ethylene carbonate (EC), propylene carbonate (PC), butylene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS), diethyl sulfone (ESE), tetraethylene glycol dimethyl ether (TEGDME), ethylene glycol dimethyl ether (DME), 1,3-dioxolane (DOL), trimethyl phosphate, 3-methoxypropionitrile, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, CF₃CHFCF₂OCH₃, CF₃CHFCF₂OCH₂CH₃, 2-trifluoromethylhexafluoropropyl methyl ether, 2-trifluoromethylhexafluoropropyl ethyl ether, 2-trifluoromethylhexafluoropropyl propyl ether, 3-trifluoromethyloctafluorobutyl methyl ether, 3-trifluoromethyloctafluorobutyl ethyl ether, 3-trifluoromethyloctafluorobutyl propyl ether, 4-trifluoromethyldecafluoropentyl methyl ether, 4-trifluoromethyldecafluoropentyl ethyl ether, 4-trifluoromethyldecafluoropentyl propyl ether, 5-trifluoromethyldodecafluorohexyl methyl ether, 5-trifluoromethyldodecafluorohexyl ethyl ether, 5-trifluoromethyldodecafluorohexyl propyl ether, 6-trifluoromethyltetradecafluoroheptyl methyl ether, 6-trifluoromethyltetradecafluoroheptyl ethyl ether, 6-trifluoromethyltetradecafluoroheptyl propyl ether, 7-trifluoromethylhexadecafluorooctyl methyl ether, 7-trifluoromethylhexadecafluorooctyl ethyl ether, and 7-trifluoromethylhexadecafluorooctyl propyl ether.

In some embodiments, the electrolytic solution may optionally include additives. For example, the additive may include an anode film forming additive, may also include a cathode film forming additive, and may further include an additive that can improve particular battery performance, for example, an additive that improves battery overcharging performance or an additive that improves high temperature performance of the battery, or an additive that improves low-temperature power performance of the battery.

### [Separator]

The battery cell may further include a separator. The separator is located between the cathode and the anode, to mainly play a role in preventing internal short-circuiting.

The type of the separator film is not particularly limited in this application, and any well-known separator film of a porous structure having good chemical stability and mechanical stability may be used.

In some embodiments, the material of the separator may include, but is not limited to, one or more of glass fiber, non-woven cloth, polyethylene, polypropylene, and polyvinylidene fluoride. The separator may be a single-layer film or a multilayer composite film. When the separator is a multilayer composite film, materials of the layers are the same or different.

A preparation method for a battery cell is well-known. In some embodiments, a battery cell may be formed by assembling a cathode, a separator, an anode, and an electrolytic solution. For example, an electrode assembly may be formed from the cathode, the separator, and the anode through a winding process and/or a lamination process. The electrode assembly is placed in an outer package, and then is baked and then injected with the foregoing electrolytic solution. After drying, the electrolytic solution is injected, and a battery cell is obtained through procedures such as vacuum packaging, standing, and formation. A plurality of battery cells may be further connected in series, in parallel, or in a series-parallel connection to form a battery module. A plurality of battery modules may be connected in series, in parallel, or in a series-parallel connection to form a battery pack. In some embodiments, Alternatively, a plurality of battery cells may directly form a battery pack.

An embodiment of this application further provides an electric device. The electric device includes the battery provided in the embodiments of this application. The battery may be used as a power source of the electric device, or may be used as an energy storage unit of the electric device. The electric device may be, but is not limited to, a mobile device (for example, a mobile phone, a tablet computer, or a notebook computer), an electric vehicle (for example, a pure electric vehicle, a hybrid electric vehicle, a plug-in hybrid electric vehicle, an electric bicycle, an electric scooter, an electric golf cart, or an electric truck), an electric train, a ship and a satellite, an energy storage system, or the like.

A type of the battery may be selected for the electric device according to a use requirement of the electric device, for example, a battery cell, a battery module, or a battery pack.

FIG. 6 is a schematic diagram of an electric device as an example. The electric device is an all-electric vehicle, a hybrid electric vehicle, a plug-in hybrid electric vehicle, or the like. To satisfy requirements of the electric device for high power and high energy density, a battery pack or a battery module may be used.

For another example, the electric device may be a mobile phone, a tablet computer, a notebook computer, or the like. The electric device usually needs to be light and thin, and a battery cell may be used as a power source.

### Embodiments

Content disclosed in this application is described in detail in the following examples. These examples are only for illustrative purposes because various modifications and changes made without departing from the scope of the content disclosed in this application are apparent to persons skilled in the art. Unless otherwise stated, all parts, percentages, and ratios of the following examples are based on weight, all reagents used in the examples are commercially available or synthesized according to conventional methods and can be directly used without further treatment, and all instruments used in the examples are commercially available.

### Example 1

A commercially available brass mesh has a designation of H75 (indicating that a mass fraction of Cu is 75%, and a mass fraction of Zn is 25%), a wire diameter of 100 µm, and a mesh count of 200 mesh.

First, a surface of the brass mesh was wiped with 1 mol/L of acetic acid solution, then the brass mesh was cleaned ultrasonically with ethanol and deionized water, and then the brass mesh was dried under vacuum at 80°C for later use.

1 mol/L of acetic acid solution was prepared, and was added dropwise to 200 mL of prepared 1 mol/L CuSO₄ solution, and pH of a mixed system was adjusted to 6.5, to obtain a reaction solution, for later use.

The dried brass mesh sample was soaked in the reaction solution, and then was placed in an ultrasonic cleaning machine to perform ultrasonic reaction for 30 min. During the reaction, it can be observed that the surface of the brass mesh sample changed from yellow to dark red. The reaction was ended to take out the sample. Then, the sample was cleaned a plurality of times with deionized water and ethanol, and then the sample was dried under vacuum at 80°C, to obtain an anode current collector.

### Example 2

A preparation method for an anode current collector is similar to that in Example 1, and a difference lies in that a content of Cu in a commercially available brass mesh is different.

The commercially available brass mesh has an alloy designation of H65, indicating that a mass fraction of Cu is 65%, and a mass fraction of Zn is 35%.

### Example 3

A preparation method for an anode current collector is similar to that in Example 1, and a difference lies in that a content of Cu in a commercially available brass mesh is different.

The commercially available brass mesh has an alloy designation of H85, indicating that a mass fraction of Cu is 85%, and a mass fraction of Zn is 15%.

### Example 4

A preparation method for an anode current collector is similar to that in Example 1, and a difference lies in that a content of Cu in a commercially available brass mesh is different.

The commercially available brass mesh has an alloy designation of H96, indicating that a mass fraction of Cu is 96%, and a mass fraction of Zn is 4%.

### Example 5

A preparation method for an anode current collector is similar to that in Example 1, and a difference lies in that a wire diameter of a commercially available brass mesh is 75 µm.

### Example 6

A preparation method for an anode current collector is similar to that in Example 1, and a difference lies in that a wire diameter of a commercially available brass mesh is 150 µm.

### Example 7

A preparation method for an anode current collector is similar to that in Example 1, and a difference lies in that a mesh count of a commercially available brass mesh is 100 mesh.

### Example 8

A preparation method for an anode current collector is similar to that in Example 1, and a difference lies in that a mesh count of a commercially available brass mesh is 300 mesh.

### Example 9

A preparation method for an anode current collector is similar to that in Example 1, and a difference lies in that a mesh count of a commercially available brass mesh is 500 mesh.

### Example 10

A preparation method for an anode current collector is similar to that in Example 1, and a difference lies in that a concentration of prepared CuSO₄ solution is 5 mol/L.

### Example 11

A preparation method for an anode current collector is similar to that in Example 1, and a difference lies in that pH of a reaction solution is adjusted to 3.

### Comparative Example 1

A commercially available brass mesh has an alloy designation of H75 (indicating that a mass fraction of Cu is 75%, and a mass fraction of Zn is 25%), a wire diameter of 100 µm, and a mesh count of 200 mesh.

First, a surface of the brass mesh was wiped with a 1 mol/L of acetic acid solution, then the brass mesh was cleaned ultrasonically with ethanol and deionized water, and then the brass mesh was dried under vacuum at 80°C, to serve as an anode current collector.

### Comparative Example 2

A commercially available brass mesh has an alloy designation of H75 (indicating that a mass fraction of Cu is 75%, and a mass fraction of Zn is 25%), a wire diameter of 100 µm, and a mesh count of 200 mesh.

3 g of brass mesh was placed in 30 g of concentrated hydrochloric acid solution with a mass concentration of 20%, and the brass mesh was held at 80°C to react for 5 h. Then, the brass mesh was taken out, was washed with deionized water, and then was dried, to obtain a copper frame having a three-dimensional porous shape.

The foregoing de-alloyed copper framework having a three-dimensional porous shape was placed, in a half-reaction manner, in a silver nitrate solution with a concentration of 5 mmol/L of, to react for 1 min, and through a replacement reaction between Cu and Ag⁺, a layer of Ag was attached to the surface of the porous copper framework. After being cleaned with deionized water, the reacted three-dimensional porous copper framework was placed in an 80°C oven and was dried, to obtain an anode current collector.

### Performance test

### (1) Test of electrochemically active specific surface area of the anode current collector

The foregoing prepared anode current collector was cut into a small disk sample having a diameter of 20 mm, and a button battery was prepared by using a lithium metal sheet as a counter electrode. The electrolyte salt of the electrolytic solution of the button battery is LiFSI with a concentration of 1 mol/L, ethylene glycol dimethyl ether (DME) is used as the solvent of the electrolytic solution, ferrocene is used as the probe molecule, and the solvent has a concentration of 50 mmol/L. A PE film having a thickness of 12 µm may be used as the separator of the button battery.

A series of cyclic voltammetry curves were obtained at different sweep speeds by using an electrochemical workstation, and peak currents were obtained from the cyclic voltammetry curves; the peak currents and the square roots of the sweep speeds of the series of obtained CV curves were plotted by using a linear regression method, to obtain a slope; and the electrochemically active specific surface area of the anode current collector was calculated according to the Randles-Sevick equation. During testing, the sweep speed may be 4 mV/s, 3 mV/s, 2 mV/s, 1 mV/s, or 0.5 mV/s. The test instrument may be a SOLARTRON electrochemical workstation, Britain.

### (2) Test of tensile strength of the anode current collector

The foregoing prepared anode current collector was cut into rectangular samples having a length of 150 mm and a width of 15 mm. The tensile strength of the anode current collector was tested by using a testing machine. During the test, the quantity of anode current collector samples may be 6 or more, and test results were averaged.

Before the test, a spacing between upper and lower fixtures of the testing area needs to be adjusted to 100 mm, then the upper end of the trimmed rectangular sample was first fixed to the upper fixture of the testing area of the testing machine, to ensure as much as possible that the sample is vertical, and then the lower end of the rectangular sample was fixed to the lower fixture. The testing template uses "metal plate pulling test", a stretching mode is a constant-rate mode, a stretching rate is 50 mm/min, and a maximum force (N) borne when a sample is broken is used as a tensile strength. The test instrument may be a KJ-1069 high-speed peeling force tester of Guangdong Kejian Instrument Company Limited.

### (3) Test of nucleation overpotential of the anode current collector

In an Argon-protected glove box, a lithium metal sheet used as a counter electrode and the foregoing prepared anode current collector were assembled to form a button battery. The electrolyte salt of the electrolytic solution is LiFSI with a concentration of 1 mol/L, and ethylene glycol dimethyl ether (DME) is used as the solvent of the electrolytic solution. APE film having a thickness of 12 µm was used as the separator.

At 25°C, after standing for 12 h, the assembled button battery was discharged at a constant current with a current density of 1 mA/cm² to 1 mAh/cm². At the beginning of a lithium metal depositing process, an obvious voltage drop first occurred, and then a flat voltage platform occurred. A difference between a voltage at a lowest point and a flat part of the voltage platform was used as a nucleation overpotential of the anode current collector.

During the test, the quantity of anode current collector samples may be 6 or more, and test results were averaged.

### (4) Test for cycle performance

Lithium iron phosphate, carbon black (Super P) as a conductive agent, and polyvinylidene fluoride (PVDF) as a binder were uniformly mixed with a weight ratio of 8:1:1 in an appropriate amount of N-methylpyrrolidone (NMP) as a solvent to obtain cathode slurry. The cathode slurry was coated on an aluminum foil of a cathode current collector, and after drying, a cathode plate was obtained.

In an Argon-protected glove box, the cathode plate and the foregoing prepared anode current collector were assembled to form a button battery. The electrolyte salt of the electrolytic solution is LiFSI with a concentration of 1 mol/L, and ethylene glycol dimethyl ether (DME) is used as the solvent of the electrolytic solution. A PE film having a thickness of 12 µm was used as the separator.

At 25°C, after standing for 12 h, the assembled button battery was charged to 3.65 V at a constant current of 0.2 C, and then charged to 0.05 C at a constant voltage of 3.65 V. After standing for 10 min, the button battery was discharged to 2 V at a constant current of 0.5 C. The button battery was subjected to cyclic charge-discharge according to the foregoing method, until the discharge capacity decayed to 50% of the discharge capacity of the first cycle, and a quantity of cycles was recorded.

During the test, the quantity of button battery samples may be 6 or more, and test results were averaged.

**Table 1**

| Serial number | Alloy designation | Wire diameter (um) | Mesh count (mesh) | Concentration of CuSO₄ (mol/L) | pH | Electrochemically active specific surface area (cm²/g) | Tensile strength (N) | Nucleation overpotential vs Li/Li⁺ (mV) | Quantity of cycles (cycle) |
|---|---|---|---|---|---|---|---|---|---|
| Example 1 | H75 | 100 | 200 | 1 | 6.5 | 3.317 | 15.08 | 45 | 130 |
| Example 2 | H65 | 100 | 200 | 1 | 6.5 | 3.466 | 11.21 | 45 | 89 |
| Example 3 | H85 | 100 | 200 | 1 | 6.5 | 3.267 | 15.13 | 42 | 132 |
| Example 4 | H96 | 100 | 200 | 1 | 6.5 | 2.961 | 17.11 | 76 | 84 |
| Example 5 | H75 | 75 | 200 | 1 | 6.5 | 2.945 | 12.84 | 47 | 112 |
| Example 6 | H75 | 150 | 200 | 1 | 6.5 | 3.602 | 15.62 | 50 | 102 |
| Example 7 | H75 | 100 | 100 | 1 | 6.5 | 3.012 | 12.01 | 46 | 105 |
| Example 8 | H75 | 100 | 300 | 1 | 6.5 | 3.443 | 15.43 | 46 | 139 |
| Example 9 | H75 | 100 | 500 | 1 | 6.5 | 3.507 | 16.23 | 47 | 137 |
| Example 10 | H75 | 100 | 200 | 5 | 6.5 | 3.332 | 9.23 | 52 | 77 |
| Example 11 | H75 | 100 | 200 | 1 | 3.0 | 3.013 | 8.02 | 75 | 54 |
| Comparative Example 1 | H75 | 100 | 200 | / | / | 2.808 | 16.44 | 95 | 70 |
| Comparative Example 2 | H75 | 100 | 200 | / | / | 3.757 | 6.55 | 43 | 82 |

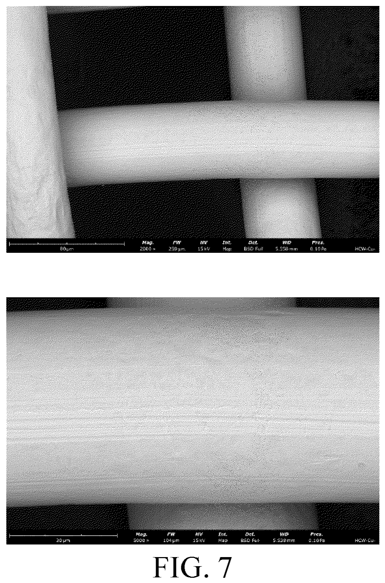

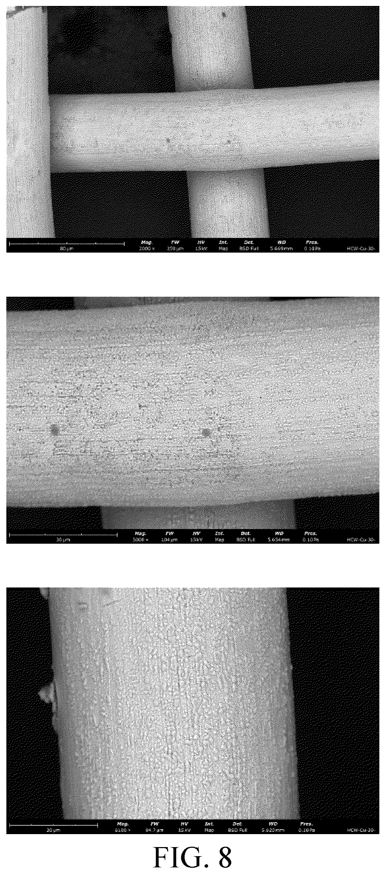

FIG. 7 shows a scanning electron microscope (SEM) image of an anode current collector prepared in comparative example 1. FIG. 8 shows a scanning electron microscope (SEM) image of an anode current collector prepared in example 1. It can be learned from FIG. 7 and FIG. 8 that, according to the preparation method provided in this application, metal nanoparticles may be precipitated from at least part of the surface of the metal substrate.

It can be known from the test results of Example 1 and Comparison Examples 1 to 2 that, the formation of the copper nanoparticles and the nano-pores on the surface of the brass mesh through the replacement reaction can effectively improve the lithium affinity and the electrochemically active specific surface area of the anode current collector without obviously reducing the tensile strength of the anode current collector, and can further reduce the nucleation overpotential of the anode current collector, thereby improving the cycle performance of the battery.

In Comparative Example 2, first, a porous copper framework was obtained through a de-alloying process, and then a layer of metal nanoparticles of Ag was attached to a surface of the porous copper framework through a replacement reaction, to form an anode current collector. Therefore, a tensile strength of the anode current collector is reduced. In addition, the material of the formed metal nanoparticles of Ag is different from that of the first metal element (that is, Cu) in the metal substrate. Because of a large solubility of Ag in Li, compared with the metal substrate of Cu, it is easier for Ag to form an alloy with Li and depart from the metal substrate of Cu. Consequently, the cycle performance of the battery is relatively poor.

It can be known from the test results of Examples 1 to 4 that, by further adjusting the content of the copper element in the brass mesh, the anode current collector can have a high tensile strength, a high electrochemically active specific surface area, a high lithium affinity, and a low nucleation overpotential, so that the battery can have good cycle performance.

It can be known from the test results of Examples 1 and 5 to 9 that, by further adjusting the wire diameter and the mesh count of the brass mesh, the anode current collector can have a high tensile strength, a high electrochemically active specific surface area, a high lithium affinity, and a low nucleation overpotential, so that the battery can have good cycle performance.

It can be known from the test results of Examples 1, 10, and 11 that, by further adjusting the concentration and pH of the reaction solution, the anode current collector can have a high tensile strength, a high electrochemically active specific surface area, a high lithium affinity, and a low nucleation overpotential, so that the battery can have good cycle performance.

It should be noted that this application is not limited to the embodiments above. The above embodiments are merely exemplary, and embodiments having substantially the same technical idea and the same effects within the scope of the technical solutions of this application are all included in the technical scope of this application. In addition, other implementations constructed by applying various modifications conceivable to those skilled in the art to the implementations and combining some of the constituent elements of the implementations without departing from the scope of the essence of this application are also included in the scope of this application.

## Claims

1. An anode current collector, wherein
the anode current collector comprises a metal substrate and metal nanoparticles located on at least part of a surface of the metal substrate; and
the metal substrate comprises a first metal element, and the first metal element is made of a material the same as the metal nanoparticles.

2. The anode current collector according to claim 1, wherein
the metal nanoparticles comprise Cu nanoparticles or Ni nanoparticles; and/or
the first metal element comprises Cu or Ni.

3. The anode current collector any one of claims 1 to 2, wherein a diameter of the metal nanoparticles ranges from 10 nm to 500 nm.

4. The anode current collector any one of claims 1 to 3, wherein the metal substrate comprises a smooth metal substrate or a mesh metal substrate.

5. The anode current collector according to claim 4, wherein
a mesh count of the mesh metal substrate is greater than or equal to 100 mesh, and optionally ranges from 200 mesh to 500 mesh; and/or
a wire diameter of the mesh metal substrate ranges from 75 µm to 150 µm, and optionally ranges from 80 µm to 120 µm.

6. The anode current collector any one of claims 4 to 5, wherein
a tensile strength of the anode current collector ranges from 8 N to 30 N; and and/or
a specific surface area of the anode current collector ranges from 190 cm²/g to 250 cm²/g.

7. The anode current collector any one of claims 1 to 6, wherein the metal substrate further comprises a second metal element, a standard electrode potential of the second metal element is less than a standard electrode potential of the first metal element, and optionally the second metal element comprises one or more of Zn, Ni, Sn, Pb, Be, and Al.

8. A preparation method for an anode current collector, comprising the following steps:
providing a metal substrate, wherein the metal substrate comprises a first metal element and a second metal element, and a standard electrode potential of the second metal element is less than a standard electrode potential of the first metal element;
providing a reaction solution, wherein the reaction solution comprises a metal salt and an acid, and a metal element in the metal salt is the same as the first metal element; and
soaking the metal substrate in the reaction solution, removing at least part of the second metal element from the metal substrate through a replacement reaction, and forming metal nanoparticles on at least part of a surface of the metal substrate, to obtain the anode current collector, wherein the first metal element is made of a material the same as that of the metal nanoparticles.

9. The preparation method according to claim 8, wherein the metal substrate and the reaction solution perform the replacement reaction in an ultrasonic state.

10. The preparation method according to any one of claims 8 to 9, wherein a time of the reaction ranges from 15 min to 60 min.

11. The preparation method according to any one of claims 8 to 10, wherein
the metal nanoparticles comprise Cu nanoparticles or Ni nanoparticles; and/or
the first metal element comprises Cu or Ni; and/or
the second metal element comprises one or more of Zn, Ni, Sn, Pb, Be, and Al; and and/or
a mass content of the second metal element in the metal substrate is less than or equal to 35%, and optionally ranges from 15% to 30%.

12. The preparation method according to any one of claims 8 to 11, wherein the metal substrate comprises a smooth metal substrate or a mesh metal substrate.

13. The preparation method according to claim 12, wherein
a mesh count of the mesh metal substrate is greater than or equal to 100 mesh, and optionally ranges from 200 mesh to 500 mesh; and/or
a wire diameter of the mesh metal substrate ranges from 75 µm to 150 µm, and optionally ranges from 80 µm to 120 µm.

14. The preparation method according to any one of claims 8 to 13, wherein
the metal salt in the reaction solution comprises one or more of a metal sulfate, a metal nitrate, a metal hydrochloride, and a metal acetate; and and/or
a concentration of metal ions in the reaction solution ranges from 0.05 mol/L to 10 mol/L, and optionally ranges from 0.5 mol/L to 5 mol/L; and and/or
the acid in the reaction solution comprises one or more of an acetic acid and a citric acid; and and/or
a solvent of the reaction solution comprises water; and and/or
pH of the reaction solution ranges from 3 to 6.5, and optionally ranges from 6 to 6.5.

15. A battery cell, comprising the anode current collector according to any one of claims 1 to 7 or an anode current collector obtained by the preparation method according to any one of claims 8 to 14, wherein optionally, the battery cell comprises at least one of an anode-free lithium metal battery cell or an anode-free sodium metal battery cell.

16. A battery, comprising the battery cell according to claim 15.

17. An electric device, comprising the battery according to claim 16, wherein the battery is configured to supply electric energy.
